# EUROPEAN PATENT APPLICATION

(11) **EP 1 047 282 A1**
(43) Date of publication of application: **25.10.2000**
(21) Application number: 99400937.1
(22) Date of filing: 16.04.1999
(51) Int. Cl.: H04Q 11/04, H04L 12/56

(54) **Resequencing method**

(71) Applicant: ALCATEL, 75008 Paris (FR)
(72) Inventor: Hoekstra, Geert Jan, 3571 XL Utrecht (NL)
(74) Representative: Narmon, Gisèle Marie Thérèse

(57) **Abstract**

The method is used for resequencing cells of a cell-stream which are forwarded through a cell-switching network. This cell-switching network includes an input element, at least one switching element and at least one resequencing device all interconnected by links.
The cells of the cell-stream are received by the input-element, whereafter the input-element marks the cells of the cell-stream by putting a timestamp in these cells. Then the cells are forwarded to the at least one switching element and subsequently routed through this at least one switching element towards the at least one connected resequencing device, which resequences, at least a part of the cells of the cell-stream, based on the value of the time-stamp inside the cells and on a highest age of the cells of the cell-stream. This age is determined by the at least one switching element and is subsequently forwarded towards the resequencing device of the cell switching network.

## Description

The present invention relates to a resequencing method as described in the preamble of claim 1, a related system as defined in the preamble of claim 3 and related elements and devices as defined in preamble of claims 5 and 7.

Such a resequencing method, a system and related devices are already known in the art, e.g. *from section 2 of "The resequencing process in the MPSR-switch" in "Performance Analysis Of A resequencing Unit in A Multipath Self-Routing Switch Fabric " from the authors E. Desmet, B. Steyaert, H. Bruneel and G. Petit. This article is published in "Proc. 14th International Teletraffic Congress, pp. 611-621, Antibes Juan-les-Pins, France, 1994.*

Therein a multipath self-routing switching fabric is described wherein the switched ATM-cells may be disordered at the output of the switching fabric. This switching fabric exists of an input-element adding time-stamps to each incoming ATM-cell. This input-element is connected to a multistage switching network, containing a number of cascaded switching elements. To put the ATM-cells back in the right order there are resequencing devices connected to the outputs of this multistage switching network.

At first, all ATM-cells are marked by storing the slot clock value in the time-stamp field of an ATM-cell. Subsequently the marked cells are forwarded through the switching fabric. At the output of the switching fabric the cells may come out, out of order.

For a specific configuration it is determined that the cells at most need a time-period of D_{MAX} to get from the input-element to the output of the switching fabric. If the principle is used that each cell is sent out a time-period D_{MAX} after reception, the cells will be sent out in the order they were received at the input-element. The cells that reach the output of the switching-fabric after expiration of time-period D_{MAX}, cannot be used anymore and will be discarded. The determination of the time-period D_{MAX} is a trade-off between cell-loss and efficiency together with delay of the switching fabric.

The resequencing device checks the timestamp-value of each cell and compares this time with the current time. Subsequently the resequencing device will send out each cell, which has spent a time-interval D_{MAX} within the switching-fabric. Cells, which arrive earlier, will be stored within the resequencing buffer of the switching-fabric till time-interval D_{MAX} has expired. This means that the delay of the outputted cells is at least D_{MAX} while a number of cells already could have been outputted even before expiration of D_{MAX.} This situation is not efficient because in case there is no network-load a lot of cells will arrive early at the output of the switching-fabric, which could have sent out before expiration of D_{MAX}.

An object of the present invention is to provide a method and a system for resequencing cells of the above known type but wherein the resequencing is performed more efficiently and the delay-time of cells between input en output of the switching fabric is reduced on average for all cells.

According to the invention, this object is achieved by the method described in claim 1 and 2, the system as described in claim 3 and 4 and the related devices as described in claims 5, 6 and 7.

Indeed due to the fact that each switching element of the cell switching network CSN determines the age of the oldest cell available within these switching elements, this age can be forwarded, at least to the resequencing device involved in outputting the corresponding cell-stream. In this way, this resequencing device is notified of the highest cell age of cells to be expected. Based on this information a decision can be made, which cells can be sent out and which have to wait till older cells have arrived.

An additional feature of the present invention is mentioned in claim 8. By only determining the highest cell age between all inputs and a group of all outputs of a switching element the highest age is determined only for this or these relevant outputs, in this way providing a highest cell age only relevant for the upstream switching elements and/or resequencing devices behind that group of all outputs.

The above and other objects and features of the invention will become more apparent and the invention itself will be best understood by referring to the following description of an embodiment taken in conjunction with the accompanying drawings wherein:

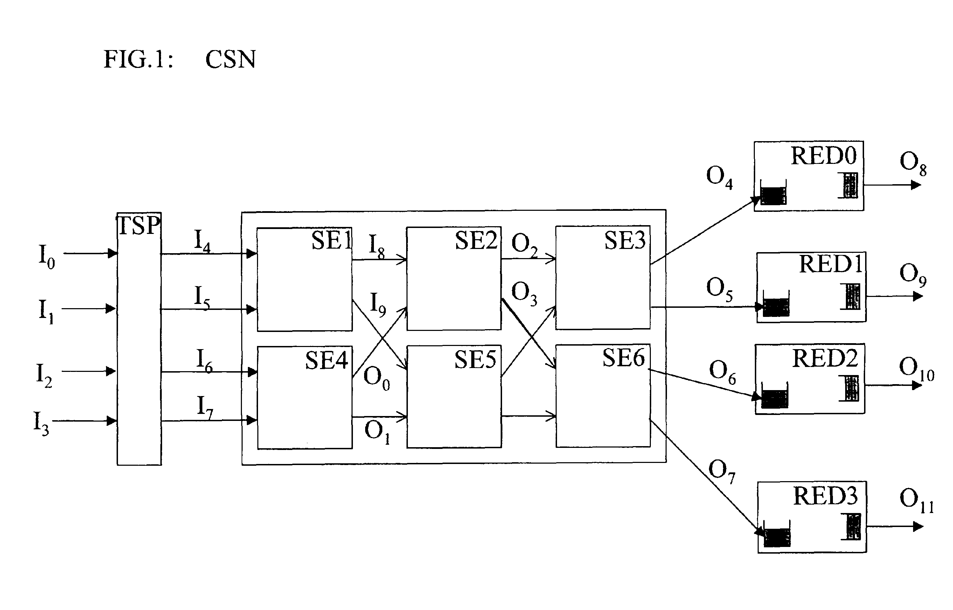

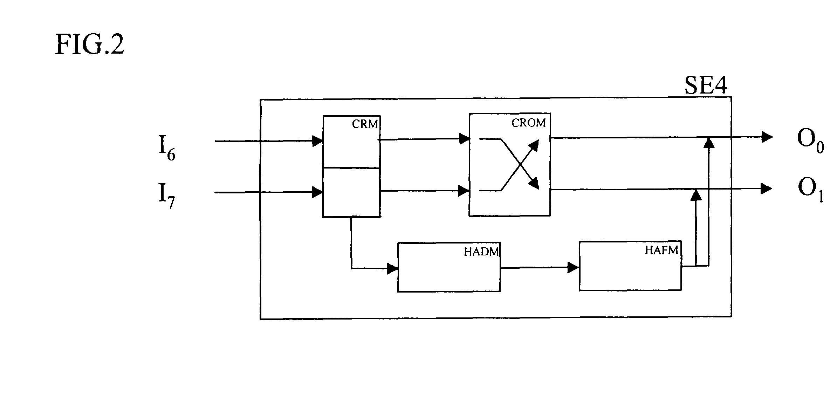

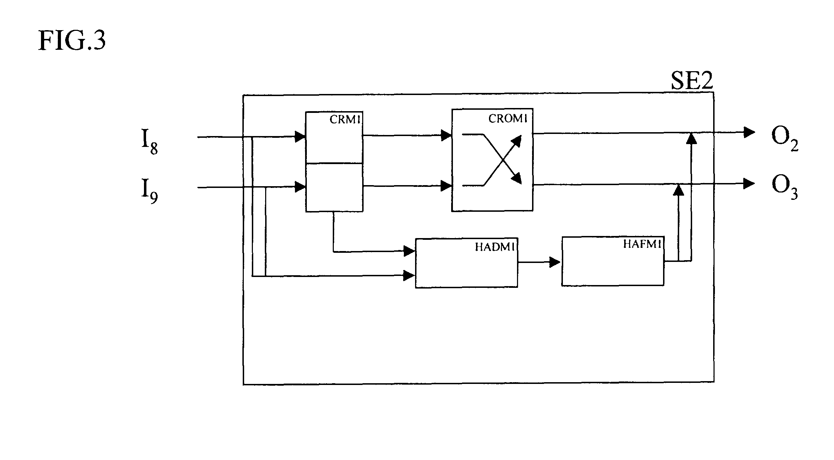

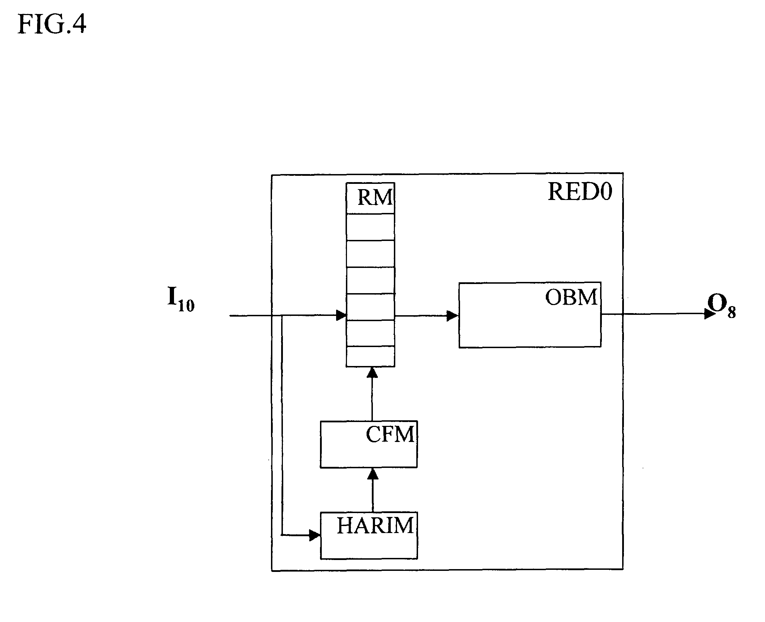

FIG. 1 represents a cell switching network CSN wherein the resequencing method is performed, FIG. 2 represents the functional built-up of switching element SE4 of FIG. 1, FIG. 3 in its turn represents functional built-up of switching element SE2 of FIG. 1 and FIG.4 represents the functional built-up of a resequencing device RED0 of FIG. 1.

In the following paragraphs, referring to the drawings, an implementation of the method according to the present invention will be described. In the first paragraph of this description the main elements of this resequencing method and corresponding resequencing system are described. In the second paragraph, all connections between the before mentioned switching network elements and described means are defined. In the succeeding paragraph the actual execution of the resequencing system is described.

The essential elements of cell switching network CSN of the embodiment according to the present invention are the input element TSP, switching elements SE1-SE6 and resequencing devices RED0-RED3 as shown in FIG. 1. The main task of the input element TSP is receiving cells of a cell-stream and marking each of these cells with a time-stamp. Subsequently the switching elements SE1-SE6, all route cells of the cell-stream from one of the inputs to one of its outputs. In the end there are the resequencing devices RED0 - RED3 that put the disordered cells, outputted by switching element SE3 and SE6 back in the right order.

For this embodiment it is assumed that the cell-stream is an ATM cell-stream, the switching elements are ATM switching elements and the resequencing devices are ATM-cell resequencing devices.

The input element has four input-terminals I₀-I₃ and four output-terminals which are at the same time input-terminals I₄-I₇ of the switching elements SE1 and SE4. Switching element SE1 has two output-terminals wherefrom one is coupled to an input-terminal I₈ of switching-element SE2 and another to an input-terminal of switching element SE5. Switching element SE4 in its turn has two output-terminals O₀ and O₁ wherefrom one is also coupled to an input-terminal I₉ of switching-element SE2 and another also to an input-terminal of switching element SE5. Output-terminals O₂ and O₃ of switching-element SE2 are, in the same way as switching-elements SE1 and SE4, coupled to an input-terminal of the respective switching-elements SE3 and SE6 and the output-terminals of switching-element SE5 are also coupled to an input-terminal of the respective switching-elements SE3 and SE6. Both, switching element SE3 and SE6 have two output-terminals, the respective output-terminals O_{4,} O₅, O₆ and O₇, which are respectively also input-terminals of the respective resequencing devices RED0-RED3. Each resequencing device has an output-terminal, respectively the output-terminals O₈-O₁₁.

Switching element SE4, as presented in FIG. 2, contains a cell reception means CRM adapted to keep the highest age of passed cells for each of the input-terminals I₆ and I₇. It further contains a cell routing means CROM adapted to route the ATM-cells of the cell-stream from one of the inputs via the cell reception means CRM towards one of the outputs. Besides this there is also a highest cell age determining means HADM which is adapted to determine the age of the oldest cell available within the switching element and a highest cell age forwarding means HAFM which is adapted to forward information indicative for said age of said oldest available cell within these switching element SE4 towards the adjacent downstream switching elements SE2 and SE5.

Cell reception means CRM has two input-terminals that both are also input-terminals of switching element SE4. The cell reception means CRM has two output-terminals whereof each of them is coupled to one of both input-terminals of cell routing means CROM. Cell routing means CROM has two output-terminals that are at the same time the respective output-terminals O₀ and O₁ of switching element SE4.

A third output-terminal of the cell reception means CRM of switching element SE4 is coupled to the highest cell age determining means HADM that in its turn is coupled to the highest cell age forwarding means HAFM. The output-terminal of highest cell age forwarding means HAFM is coupled to both output-terminals of cell routing means CROM.

Switching element SE1 has the same structure as switching element SE4 as described before and as presented in FIG. 2.

In this embodiment both switching elements SE1 and SE4 distribute the received ATM-cells random over the belonging output-terminals of the respective switching-elements SE1 and SE4.

Switching element SE2, as presented in FIG. 3, is built-up in the same way as switching elements SE1 and SE4, except for a highest cell age determining means HADM1 of switching element SE2 that has an additional input-terminal coupled to both the input-terminals of a cell reception means CRM1.

Switching elements SE3, SE5 and SE6 have the same structure as switching element SE2 as described before and as presented in FIG. 3.

In this embodiment all switching elements SE2, SE3, SE5 and SE6 route the received ATM-cells in direction of or towards the aimed output of switching element SE3 and SE6.

Resequencing device REDO as presented in FIG. 4, contains a resequencing means RM, which is adapted to put received ATM-cells back in the original order based on time-stamp information and forwarded highest cell age information. The resequencing device REDO further contains an output-buffer means OBM to store the resequenced cells before outputting them, a cell filtering means CFM, which is adapted to control the resequencing means and determines which cell should be sent out and which cells have to wait and at last a highest cell age reception and interpreting means HARIM, which is adapted to receive and interpret the highest cell age of cells available within the upstream in switching elements SE1-SE6.

The resequencing means RM has an input-terminal, which is also an input-terminal I₁₀ of resequencing device RED0. I₁₀ corresponds to O₄ of FIG.1. An output-terminal of resequencing means RM is coupled to output-buffer means OBM, which has an output-terminal being also an output-terminal O₈ of resequencing device RED0. An input-terminal of the highest cell age reception and interpreting means HARIM is coupled to input-terminal I₁₀ of resequencing device RED0. The highest cell age reception and interpreting means HARIM is coupled to the cell filtering means CFM that subsequently is coupled to the resequencing means RM.

Resequencing devices RED1, RED2 and RED3 have the same structure as resequencing device RED0 as described before and as presented in FIG. 4. In order to explain the execution of the present invention it is supposed that an ATM-cell-stream is fed to input-terminal I₃ of input-element TSP. It is also assumed that these cells do have output-terminal O₈ as a destination.

Input-element TSP marks all cells of this ATM cell-stream with a timestamp by putting the current clock-value in the timestamp-field of each received ATM-cell. Subsequently, the ATM cell-stream, further referred to as cell-stream, is forwarded to input-terminal I₇ of switching element SE4. It is further assumed that switching element SE4 has a cell distributing routing function whereby it randomly will distribute received cells over its outputs O₀ and O₁ in order to spread the load over the entire network.

The cells are, via input-terminal I₇, received by the cell reception means CRM of switching element SE4 which keeps the highest age of received cells for each input separately and further forwards the received cells towards the cell routing means CROM. The cell routing means CROM then routes the cells of the cell-stream, randomly to one of the output-terminals O₀ and O₁ of switching element SE4. It is also assumed that, since these cells all will be routed towards output-terminal O₄ of switching element SE3, these cells are received via the corresponding cell reception means of switching elements SE2 and SE5, that in its turn forward the cells via the respective cell routing means of both the switching elements SE2 and SE5. Then these cells will be routed towards switching element SE3 that will route them subsequently towards output-terminal O₄. Because of the fact that the cells of the cell-stream which was fed to input-terminal I₃ may be disordered at output-terminal O_{4,} caused by different delay-times between the input and outputs on both paths, the outputted cell-stream will be resequenced by resequencing device RED0.

In the mean time the highest cell age determining means HADM of switching element SE4 subsequently determines, by comparing the highest cell ages as kept for each input. The highest value resulting from this comparison then represents the oldest cell age of a cell available within switching element SE4. The highest cell age forwarding means HAFM of switching element SE4 broadcasts this determined oldest cell age, which is indicative for said age of said oldest available cell within said switching element, on all outputs by putting this oldest cell age in empty ATM-cells directed to output-terminals O₀ and O₁ of switching element SE4. In this way the oldest cell age is made available within the switching elements SE2 and SE5. The highest cell age determination means HADM1 of the switching elements SE2 receives this cell containing the oldest cell age of cells available within the upstream switching element SE4. The highest cell age determining means HADM1 of switching element SE2 determines, by comparing the highest cell age of cells available within switching element SE4 as received via input-terminal I₉ with all highest cell ages as kept for each input by cell reception means CRM1 of switching element SE2. The highest value resulting from this comparison then represents the oldest cell age of a cell available within switching element SE2 and switching element SE4. The oldest cell age determination is done by switching element SE5 in the same way as before described for switching element SE2. Based on the highest cell age value as is kept within the cell reception means of the respective switching elements SE2 and SE5 combined with the oldest cell age available within the upstream switching element SE4 which cell age is the oldest cell age available up to the switching elements SE2 and SE5. After determination of this oldest cell age in both switching elements SE2 and SE5, the highest cell age forwarding means of both switching element SE2 and SE5 broadcasts this determined oldest cell age, on all outputs by putting this oldest cell age in empty ATM-cells. The age information is passed in the same way as described for switching-elements SE2 and SE5, by the downstream switching-elements SE3 and SE6. In the end there is, at all output-terminals O₄-O₇ of switching-elements SE3 and SE6, age information available about the oldest cell age still available, upstream in the cell switching network CSN. For the further description of the execution of the present invention only output O₄ is further regarded.

The highest cell age reception and interpreting means HARIM of resequencing device RED0 receives these cells containing the oldest cell age of cells available within the upstream switching network via input-terminal I₁₀. This information is forwarded to the cell filtering means CFM that controls the resequencing means of resequencing device RED0. This cell filtering means knows the age of cells of the cell-stream still available in the upstream switching network and based hereon sends out, in the proper order, all cells that are older than this oldest age of cells of the cell-stream still available in the upstream switching network. Cells, present within resequencing means RM, that can be send out because no older cells are on its way are further resequenced based on the time-stamp of the meant cells.

All resequenced cells are stored within output buffering means OBM of resequencing device RED0.

It is to be remarked that a necessary condition for the proper execution of the present invention is the guaranteed transport of the highest cell age from and through the switching elements SE1, SE2, SE3, SE4, SE5 and SE6 towards the resequencing devices RED0, RED1, RED2 and RED3. In case of the multipath self-routing switch as known from the previous described, closest prior art document this transportation via a guaranteed connection is achieved by broadcasting this cell age information through this switch, making use of the fact that such a switch is over-dimensioned in such a way to allow the broadcasting and making sure that there is at least one path carrying the highest cell age in this way to the meant resequencing device RED0,RED1,RED2,RED3. Alternatively this guaranteed transport may be realised by using a kind of signalling network or by means of control-links interconnecting all network elements.

Another remark is that additionally to the forwarding of the highest cell ages from a switching element, eventually through other switching elements, towards a resequencing device may be done by setting a flag in the header of each cell. The flag then indicates that the cell age of this cell, as represented by the timestamp of this cell, is the oldest age within the switching element that has set the flag. The forwarding of the highest cell ages from a switching element, eventually through other switching elements, towards a resequencing device can also be done by broadcasting the information, using empty cells.

It is further remarked that for reasons of simplicity the cell switching network CSN is described as a three-stage network, each containing two switching elements. Usually such a cells switching network consists of more then three stages each containing a plurality of switching elements.

It is also remarked that such a switching element also may contain one or more output-buffers of different sizes. These are also left out the description because of reasons of simplicity. In case a switching element does contain one or more output-buffer(s) it is very important to notice that it is necessary to take cells that are present within the output-buffer(s) into account for the determination of the highest cell age within this switching element. In that case, the highest cell age determination means of the switching element SE1, SE2, SE3, SE4, SE5, SE6 has to take into account the cell age of cells within the output-buffer(s) in the comparison to determine the highest cell age. Thereto the cells present within the output-buffer(s) are scanned to determine the age of these cells.

Another remark is that instead of determination of the highest cell age for the entire switching element, the highest age can also be determined for the specific paths, determined by an output or group of outputs, within a switching element. In that case the highest cell age is determined by comparing the highest cell age kept for each input of the meant switching element and also, in case of an output-buffers at the outputs, considering the cells within the output-buffer(s) for the specific output or outputs for determination the highest cell age on the specific path

A further remark is that although in the previous described embodiment an ATM cell switching network is chosen to explain the execution of the present invention, other cell switching networks like an Internet Protocol network also could have been chosen.

Although the above embodiment of the invention has been described by means of functional blocks, their detailed realisation based on this functional description should be obvious for a person skilled in the art and is therefore not described.

While the principles of the invention have been described above in connection with specific apparatus, it is to be clearly understood that this description is made only by way of example and not as a limitation on the scope of the invention, as defined in the appended claims.

## Claims

1. Resequencing method to be used for resequencing cells of a cell-stream forwarded through a cell switching network (CSN), from an input of a plurality of inputs (I₀, I₁, I₂, I₃) of said cell switching network (CSN) towards an output of a plurality of outputs (O₈, O₉, O₁₀, O₁₁) of said cell switching network (CSN), said cell switching network (CSN) containing an input element (TSP), at least one switching element (SE1, SE2, SE3, SE4, SE5, SE6) and at least one resequencing device (RED0, RED1, RED2, RED3) interconnected by links, said method comprising the steps of:
a. reception of said cells at said input-element (TSP);
b. cell marking of said cells at said input-element (TSP), by putting a timestamp in said cells;
c. routing said cells through said at least one switching element (SE1, SE2, SE3, SE4, SE5, SE6); and
d. resequencing of at least part of said cells by one of said at least one resequencing device (RED0, RED1, RED2, RED3), based on the value of said time-stamp inside said cells,
**CHARACTERISED IN THAT** said method further comprises the steps of:
e. determination of a highest age of said cells of said cell-stream by said at least one switching element (SE1, SE2, SE3, SE4, SE5, SE6);
f. forwarding said highest age of said cells towards said one of said at least one resequencing device (RED0, RED1, RED2, RED3) of said cell switching network (CSN);
g. reception of said highest age of said cells of said cell-stream by said at least one resequencing device (RED0, RED1, RED2, RED3); and h. controlling of said resequencing by also making use of said highest age of said cells.

2. Resequencing method according to claim 1, **CHARACTERISED IN THAT** said making use of said highest age of said cells by said resequencing device is done by only resequencing, based on the value of said time-stamp inside said cells, those cells with a higher age than said highest age of said cells.

3. Resequencing system to be used for resequencing cells of a cell-stream forwarded through a cell switching network (CSN), from an input of a plurality of inputs (I₀, I₁, I₂, I₃) of said cell switching network (CSN) towards an output of a plurality of outputs (O₈, O₉, O₁₀, O₁₁) of said cell switching network (CSN), said cell switching network (CSN) containing an input element, at least one switching element (SE1) and at least one resequencing device (RED0, RED1, RED2, RED3) all interconnected by links, said system comprising the following means:
a. cell reception means (CRM), adapted to receive said cells of said cell-stream at said input-element;
b. cell marking means (CMM), adapted to mark each of said cells, with a timestamp, at said input-element (TSP);
c. cell routing means (CROM), adapted to route said cells through said at least one switching element (SE1, SE2, SE3, SE4,SE5,SE6); and
d. resequencing means (RM), included in said at least one resequencing device (RED0, RED1, RED2, RED3) and adapted to resequence said cells, based on the value of said time-stamp inside said cells (RED0, RED1, RED2, RED3) ,
**CHARACTERISED IN THAT** said system further comprises :
e. highest cell age determining means (HADM) included in said at least one switching element (SE1,SE2,SE3, SE4,SE5,SE6) and adapted to determine a highest age of said cells;
f. highest cell age forwarding means (HAFM) included in said at least one switching element (SE1,SE2,SE3, SE4,SE5,SE6) and adapted to forward said highest age of said cells towards said at least one resequencing device (RED0, RED1, RED2, RED3);
g. reception means (HARIM) included in said at least one resequencing device (RED0, RED1, RED2, RED3) adapted to receive said highest age of said cells of said cell-stream by said at least one resequencing device (RED0, RED1, RED2, RED3); and
h. cell filtering means (CFM), adapted to control said resequencing means (RM) by also using said highest age of said cells.

4. Resequencing system according to claim 3, **CHARACTERISED IN THAT** said cell filtering means (CFM), adapted to control said resequencing means (RM) by said using said highest age of said cells is performed by only resequencing, based on the value of said time-stamp inside said cells, those cells with a higher age than said highest age of said cells.

5. Switching element (SE4) to be used in a cell switching network (CSN) for switching cells between a plurality of inputs (I₆, I₇) and a plurality of outputs (O₀, O₁) of said switching element (SE4), said switching element (SE4) comprising the following means:
a. cell reception means (CRM), adapted to receive said cells from said plurality of inputs (I₆, I₇); and
b. cell routing means (CROM), adapted to route said cells towards an output of said plurality of outputs (O₀, O₁), **CHARACTERISED IN THAT** said cell reception means (CRM), is further adapted to keep for each input of said plurality of inputs (I₆, I₇) a highest age of said cells;
and in that said switching element (SE4) further comprises the following means:
c. highest cell age determining means (HADM) adapted to determine an age of an oldest cell available within said switching element (SE4); and
d. highest cell age forwarding means (HAFM) adapted to forward information indicative for said age of said oldest available cell.

6. Switching element according to claim 5, **CHARACTERISED IN THAT** said highest cell age determining means (HADM) is further adapted to receive a highest cell age from another switching element connected to said switching element and to possibly adapt the value of said highest cell age based upon said age of said oldest cell available in said switching element.

7. Resequencing device (RED0, RED1, RED2, RED3) to be used in a cell switching network (CSN) and wherein said resequencing device (RED0, RED1, RED2, RED3) is adapted to be coupled to a switching element (SE1,SE2,SE3, SE4,SE5,SE6) adapted to route cells and supply said resequencing device (RED0, RED1, RED2, RED3) with said cells, said resequencing device (RED0, RED1, RED2, RED3) comprising the following means:
a. resequencing means (RM), adapted to resequence said cells based on an included time-stamp;
b. cell filtering means (CFM), adapted to control said resequencing means (RM); and
c. output buffering means (OBM), adapted to buffer said resequenced cells before outputting, **CHARACTERISED IN THAT** said resequencing device (RED0, RED1, RED2, RED3) further comprises a highest cell age reception and interpreting means (HARIM), adapted to receive and interpret the highest cell age of a cells available in said switching element (SE1,SE2,SE3, SE4,SE5,SE6) and to forward this age information to said cell filtering means (CFM), said cell filtering means (CFM) further being adapted to control said resequencing means (RM) in order to resequence said cells also based on said age information.

8. Switching element (SE4) according to claim 5, **CHARACTERISED IN THAT** said highest cell age determining means (HADM) is further adapted to determine said highest cell age only on a path between said plurality of inputs (I₆, I₇) and a part of said plurality of outputs (O₀, O₁).

9. Switching element according to claim 5, **CHARACTERISED IN THAT** said highest cell age forwarding means (HAFM) is adapted to forward said age of said oldest available cell in empty cells of said cells.

10. Switching element according to claim 5, **CHARACTERISED IN THAT** said highest cell age forwarding means (HAFM) is adapted to forward said age of said oldest available cell by setting a flag in said oldest available cell.
